# FASCICULE DE BREVET EUROPEEN

(11) **EP 1 094 578 B1**
(45) Date de publication et mention de la délivrance du brevet: **16.07.2008**
(21) Numéro de dépôt: 00402714.0
(22) Date de dépôt: 03.10.2000
(51) Int. Cl.: H02G 3/04

(54) **Agrafe de retenue pour goulotte, notamment pour appareillages électriques**
Befestigungsklammer für Kabelkanal, insbesondere für elektrische Geräte
Fixing clamp for channel, e.g. for electrical apparatus

(30) Priorité: 18.10.1999 FR 9912965
(43) Date de publication de la demande: 25.04.2001
(73) Titulaire: LEGRAND FRANCE, 87000 Limoges (FR); LEGRAND SNC, 87000 Limoges (FR)
(72) Inventeur: Decore, Bertrand, 72650 la Chapelle Saint Aubin (FR); Decore, Raphaël, 72140 Parennes (FR)
(74) Mandataire: Santarelli

(56) Documents cités:
- EP-A- 0 838 885
- WO-A-98/10499
- DE-A- 2 415 768

## Description

La présente invention concerne d'une manière générale l'équipement des goulottes du type de celles mises en oeuvre pour le logement et la protection de divers appareillages, en particulier d'appareillages électriques, ainsi que pour le logement et la protection des câbles, conducteurs ou autres canalisations nécessaires à la desserte de ceux-ci.

Par goulotte, on entend, ici, de manière usuelle, un profilé formé, d'une part, d'un socle, de section transversale ouverte, et, d'autre part, d'au moins un couvercle, qui, pour la fermeture de ce socle, est apte à être rapporté sur celui-ci, par exemple par encliquetage.

Le socle comporte, lui-même, usuellement, d'une part, un fond, par lequel il est adapté à être rapporté sur un quelconque support, par exemple un mur ou une cloison, et, d'autre part, une ou plusieurs parois longitudinales, telles que, par exemple, au moins une aile latérale, lorsque sa section transversale est en U ou en L, et au moins une cloison interne, fixe ou amovible, lorsque son volume intérieur est fragmenté transversalement en deux ou plusieurs compartiments.

La présente invention vise plus précisément les agrafes de retenue qui, destinées à l'équipement d'une telle goulotte, sont à rapporter, transversalement, de place en place, sur le socle de celle-ci, pour refermer, localement, au moins partiellement, l'un au moins des compartiments de ce socle, et pour assurer ainsi, de manière temporaire, avant la mise en place du couvercle correspondant, ou lors d'une dépose de celui-ci, le maintien des câbles ou conducteurs qui sont eux-mêmes mis en place dans ce compartiment ou celui de ceux qui y sont déjà en place.

Deux dispositions sont envisageables à ce sujet.

Suivant la première de ces dispositions, les agrafes de retenue s'étendent en porte à faux à compter d'une quelconque paroi longitudinale du socle.

Cela est le cas, par exemple, dans la demande de brevet allemand No 24 15 768, dans laquelle la paroi longitudinale en cause est un retour d'une aile latérale du socle parallèle au fond de celui-ci.

Mais, dans cette demande de brevet allemand, les agrafes de retenue se réduisent, chacune, pour l'essentiel, à un simple volet monté rotatif sur cette paroi longitudinale.

Outre que le montage rotatif correspondant ne saurait convenir qu'à l'équipement de goulottes dont le socle est adapté en conséquence, il ne permet pas d'assurer un maintien stable de ces agrafes de retenue dans les diverses positions qu'elles sont susceptibles de prendre.

Suivant la deuxième disposition envisageable, les agrafes de retenue s'étendent de l'une à l'autre de deux parois longitudinales du socle, et celui-ci est ainsi mis à profit pour leur maintien en position.

Cela est le cas, par exemple, dans la demande de brevet allemand No 2 326 348, dans laquelle, comme précédemment, les agrafes de retenue se réduisent, pour l'essentiel, à un volet articulé à l'une des deux parois longitudinales concernées du socle, mais, dans laquelle, conjointement, elles sont équipées d'un ergot d'encliquetage permettant leur verrouillage débrayable sur l'autre de ces parois longitudinales, celle-ci présentant à cet effet un évidemment, en l'espèce en trou de serrure, pour l'engagement de cet ergot.

Outre que la présence, de place en place, d'un tel évidement sur le socle ne manque pas de compliquer singulièrement la réalisation de celui-ci, la mise en place des agrafes de retenue, et leur manipulation, sont relativement malaisées.

Il en est d'autant plus ainsi que, en l'espèce, ces agrafes de retenue doivent être déplacées en coulissement parallèlement à leur axe de rotation pour que leur ergot puisse s'engager dans la partie de moindre largeur de l'évidement correspondant du socle.

Dans le brevet français publié sous le No 2 651 387, qui concerne en fait plus un joint de couvercle qu'une réelle agrafe de retenue, les agrafes de retenue sont des pièces sensiblement rigides qui, pour leur mise en place, nécessitent en pratique une déformation temporaire du socle, les deux parois longitudinales de ce socle entre lesquelles elles s'étendent devant être écartées l'une de l'autre pour permettre leur encliquetage sur elles.

Il en est sensiblement de même dans la demande de brevet allemand No 34 41 377.

Dans la demande de brevet internationale publiée sous le No WO98/10499, il est également décrit une agrafe de retenue destinée à s'étendre de l'une à l'autre de deux parois longitudinales du socle de la goulotte à équiper.

Mais, dans cette demande de brevet internationale publiée sous le No WO98/10499, cette agrafe de retenue comporte, d'une part, une embase de fixation, par laquelle elle est apte à être rapportée localement sur l'une de ces parois longitudinales, et, d'autre part, un volet de retenue, qui est articulé à l'embase de fixation, et qui est ainsi susceptible de passer d'une position d'attente, pour laquelle il laisse un libre accès au volume intérieur sous-jacent de ce socle, à une position de service, pour laquelle il referme au contraire au moins partiellement ce volume intérieur, en venant alors en prise, en pratique par encliquetage, avec l'autre des parois longitudinales concernées de ce socle.

Ainsi, dans cette demande de brevet internationale No WO98/10499, le volet de retenue de ces agrafes de retenue doit être adapté en longueur à la largeur du ou des compartiments du socle à refermer, et, pour le maintien stable en position de service de ce volet de retenue, ce socle doit lui-même être propre à permettre l'encliquetage nécessaire à ce maintien.

Dans la demande de brevet européen No 0 838 885, enfin, un tel encliquetage est avantageusement évité, le volet de retenue des agrafes de retenue venant simplement, en position de service, s'engager, par son extrémité libre, c'est-à-dire par son extrémité opposée à l'embase de fixation, derrière une paroi longitudinale du socle de goulotte à équiper, en l'espèce le retour d'une des ailes latérales de ce socle, pour trouver un appui sur cette paroi longitudinale.

Mais, comme précédemment, ce volet de retenue doit être adapté en longueur à la largeur du ou des compartiments à fermer.

En outre, son passage en position de service nécessite une déformation temporaire du socle, ce qui n'est pas sans compliquer la mise en oeuvre de l'ensemble.

La présente invention a d'une manière générale pour objet une disposition permettant d'éviter de manière très simple ces divers inconvénients.

De manière plus précise, elle a pour objet une agrafe de retenue pour goulotte, du genre comportant, d'une part, une embase de fixation, par laquelle elle est apte à être rapportée localement sur une quelconque paroi longitudinale du socle d'une telle goulotte, telle que par exemple une aile latérale de ce socle ou une cloison interne de celui-ci, et, d'autre part, un volet de retenue, qui est articulé à l'embase de fixation, et qui est ainsi susceptible de passer d'une position d'attente, pour laquelle il laisser un libre accès au volume intérieur sous-jacent de ce socle, à une position de service, pour laquelle il referme au contraire au moins partiellement ce volume intérieur, en s'étendant alors sensiblement transversalement par rapport à celui-ci, cette agrafe de retenue étant d'une manière générale caractérisée en ce qu'elle comporte, de manière indépendante de tout organe ou composant du socle ou de la goulotte, des moyens de verrouillage débrayables du volet de retenue dans sa position de service.

Autrement dit, suivant l'invention, le maintien stable en position de service du volet de retenue est obtenu sans que, pour ce faire, le socle sur lequel l'agrafe de retenue est rapportée intervienne en quoi que ce soit du côté de ce volet de retenue opposé à l'embase de fixation.

Avantageusement, les moyens de verrouillage sont agencés de manière à créer, sur le trajet du volet de retenue, un point dur de part et d'autre duquel ledit volet de retenue est stable dans ses positions de service et d'attente.

Par exemple, les moyens de verrouillage débrayables mis en oeuvre de manière autonome dans ce but comportent, d'une part, en saillie sur l'embase de fixation, au moins un talon de verrouillage, et, d'autre part, sur le volet de retenue, en correspondance avec le talon de verrouillage précédent, au moins une languette de verrouillage, qui est susceptible de passer d'un côté à l'autre de ce talon de verrouillage, et qui est ainsi apte à se prendre sous celui-ci.

Quoi qu'il en soit, tout en pouvant s'étendre si désiré de l'une à l'autre de deux parois longitudinales du socle de goulotte à équiper, l'agrafe de retenue suivant l'invention s'étend en pratique en porte à faux à compter d'une de ces parois longitudinales, et, malgré ce porte-à-faux, elle est avantageusement capable d'un maintien stable en position de service de son volet de retenue, grâce aux moyens de verrouillage débrayables qui, suivant l'invention, l'équipent de manière autonome à cet effet.

Ainsi, un compromis avantageux est trouvé entre une extension en porte à faux d'une telle agrafe de retenue, qui permet à son volet de retenue d'avoir une longueur indépendante de la largeur du ou des compartiments à refermer, et un maintien stable de ce volet de retenue en position de service, sans que soit à craindre pour celui-ci une quelconque rotation intempestive lorsque les câbles ou conducteurs présents dans le ou les compartiments qu'il ferme viennent à exercer sur lui un quelconque effort d'ouverture.

Selon un autre exemple, les moyens de verrouillage débrayables du volet de retenue comprennent une charnière bistable comportant le passage d'un point dur entre deux positions stables du volet de retenue, sa position de service et sa position d'attente.

Avantageusement, la charnière bistable forme un moyen de rappel élastique du volet de retenue entre le point dur et sa position stable d'origine.

En outre, l'agrafe de retenue suivant l'invention ne dépendant pas, pour le maintien en position de service de son volet de retenue, du socle sur lequel elle est rapportée, sa mise en oeuvre est avantageusement particulièrement rapide et simple.

Enfin, ne nécessitant pas, pour ce maintien, une quelconque adaptation de ce socle, elle est avantageusement susceptible d'équiper, de manière quasi universelle, des socles de natures différentes, au bénéfice de l'étendue de son champ d'application.

Les caractéristiques et avantages de l'invention ressortiront d'ailleurs de la description qui va suivre, à titre d'exemple, en référence aux dessins schématiques annexés sur lesquels :
- la figure 1 est une vue en coupe transversale d'une goulotte équipée d'un premier mode de réalisation d'agrafes de retenue suivant l'invention, sans le couvercle associé au compartiment dans lequel interviennent ces agrafes de retenue, et pour la position d'attente du volet de retenue de celles-ci ;
- la figure 2 reprend, à échelle supérieure, le détail de la figure 1 repéré par un encart II sur cette figure 1 ;
- la figure 3 est une vue en perspective du seul socle de la goulotte représentée sur la figure 1, avec les agrafes de retenue correspondantes ;
- la figure 4 est, à échelle supérieure, une vue en perspective d'une de ces agrafes de retenue, vue de dessus ;
- la figure 5 est une autre vue en perspective de cette agrafe de retenue, vue de dessous ;
- les figures 6, 7 et 8 en sont, à échelle supérieure, des vues en coupe transversale, suivant, chacune respectivement, les lignes VI-VI, VII-VII et VIII-VIII de la figure 4 ;
- la figure 9 est une vue en coupe transversale analogue à celle de la figure 1, mais avec la goulotte munie du couvercle associé au compartiment dans lequel interviennent les agrafes de retenue, et pour la position de service des volets de retenue représentés ;
- la figure 10 est une vue en perspective d'une goulotte équipée d'un deuxième mode de réalisation d'agrafes de retenue selon l'invention, avec leur volet de retenue en position d'attente.
- la figure 11 est une vue en perspective analogue à celle de la figure 10, mais avec la goulotte munie du couvercle associé au compartiment dans lequel interviennent les agrafes de retenue, et pour la position de service de leur volet de retenue ;
- la figure 12 est une vue en coupe transversale de la goulotte représentée sur la figure 10 ;
- la figure 13 est une vue en coupe transversale de la goulotte représentée sur la figure 11.

En préliminaire, on notera que les éléments identiques ou similaires des différents modes de réalisation représentés sur les différentes figures seront dans la mesure du possible référencés par les mêmes signes de référence et ne seront pas décrits à chaque fois.

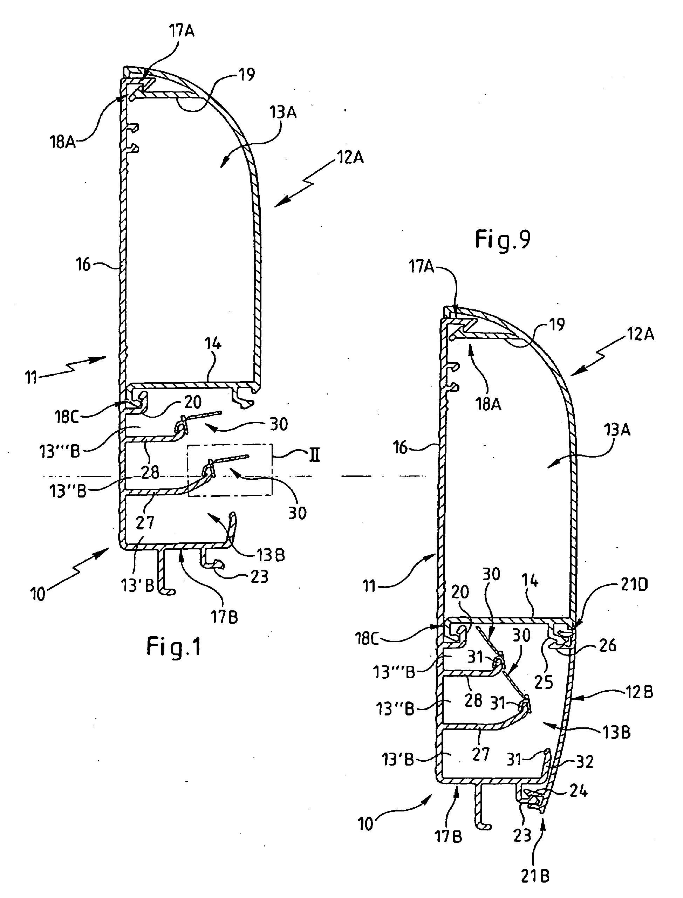

Sur les figures 1 et 9 à 13, on reconnaît, sous la référence générale 10, une goulotte comportant, de manière usuelle, d'une part, un socle 11, de section transversale ouverte, et, d'autre part, pour la fermeture de ce socle 11, au moins un couvercle 12A, 12B, propre à être rapporté sur celui-ci.

Dans la forme de réalisation représentée, le volume intérieur de cette goulotte 10, et, donc, celui de son socle 11, est fragmenté, transversalement, en deux compartiments 13A, 13B, l'un supérieur, l'autre inférieur, qui, parallèles l'un à l'autre, et contigus l'un à l'autre, courent longitudinalement sur toute sa longueur.

Il est donc prévu, dans cette forme de réalisation, parallèlement l'un à l'autre, et de manière contiguë l'un par rapport à l'autre, deux couvercles 12A, 12B, à raison d'un par compartiment 13A, 13B.

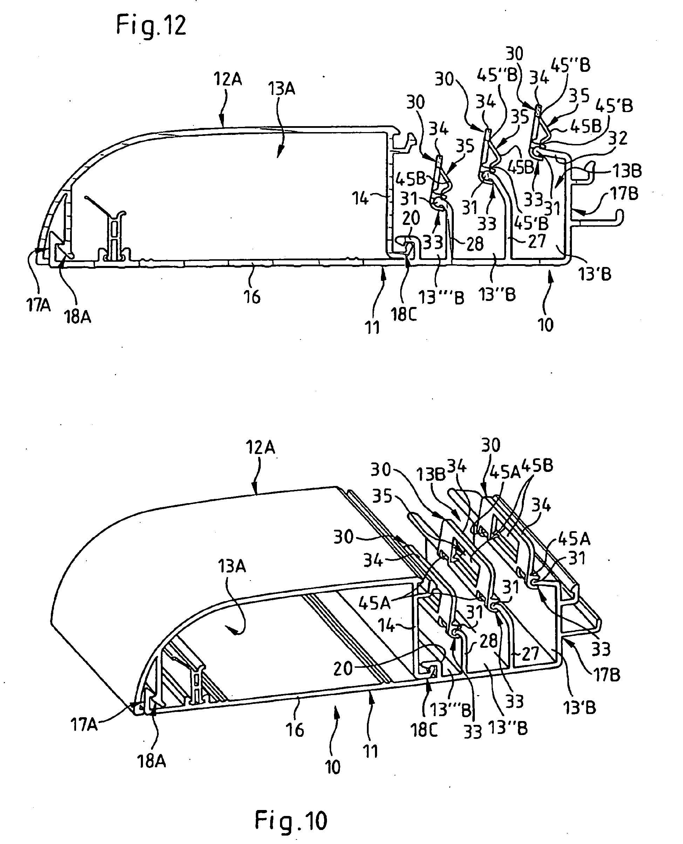

Sur les figures 1 et 12, et pour des raisons qui apparaîtront ultérieurement, l'un de ces couvercles 12A, 12B, en l'espèce le couvercle 12B associé au compartiment 13B inférieur, a été retiré.

En pratique, les deux compartiments 13A, 13B sont séparés l'un de l'autre par une cloison de compartimentage 14.

Dans la forme de réalisation représentée, cette cloison de compartimentage 14 appartient à l'un des couvercles 12A, 12B, et, par exemple, et tel que représenté, au couvercle 12A associé au compartiment 13A supérieur.

De manière connue en soi, le socle 11 comporte, dans la forme de réalisation représentée, d'une part, un fond 16, qui est sensiblement plat, et par lequel il est adapté à être rapporté sur un quelconque support, non représenté, et, d'autre part, deux ailes latérales 17A, 17B.

Dans la forme de réalisation représentée, ces ailes latérales 17A, 17B sont de hauteurs différentes, l'aile latérale 17A supérieure ayant une hauteur largement inférieure à celle de l'aile latérale 17B inférieure.

Pour le maintien du couvercle 12A associé au compartiment 13A supérieur, il est prévu, entre ce couvercle 12A et le socle 11, des moyens d'encliquetage 18A, 18C.

Les moyens d'encliquetage 18A interviennent entre l'aile latérale 17A supérieure du socle 11 et une languette 19 prévue à cet effet en saillie sur la surface intérieure du couvercle 12A.

Les moyens d'encliquetage 18C interviennent entre la cloison de compartimentage 14 et une console 20 prévue à cet effet en saillie sur le fond 16 du socle 11.

Pour le maintien du couvercle 12B associé au compartiment 13B inférieur, il est également prévu des moyens d'encliquetage 21 B, 21 D.

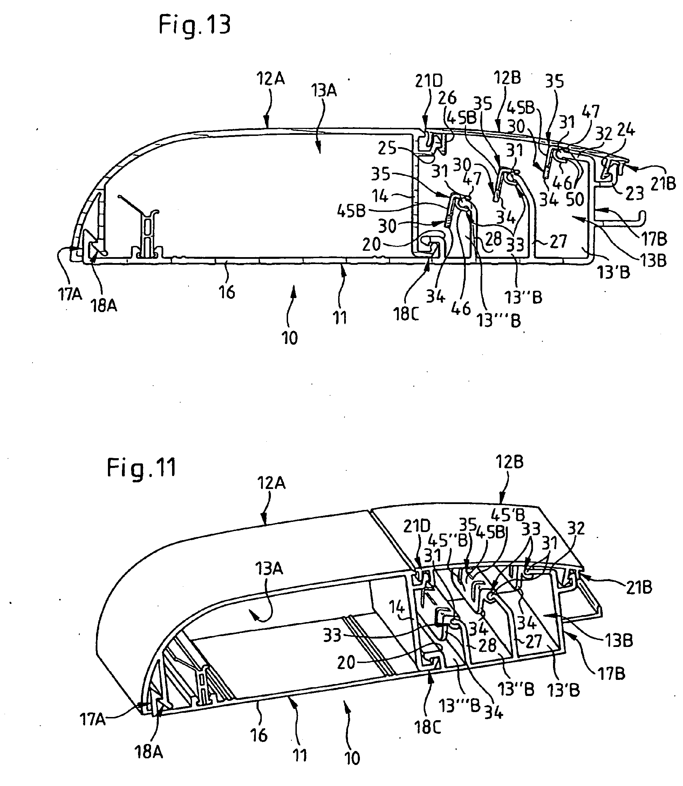

Ainsi qu'il est visible sur les figures 9 et 13, les moyens d'encliquetage 21 B interviennent entre une console 23 prévue à cet effet en saillie sur la surface extérieure de l'aile latérale 17B inférieure du socle 11 et une languette 24 également prévue à cet effet en saillie sur la surface intérieure du couvercle 12B.

Les moyens d'encliquetage 21D interviennent, eux, entre une console 25 prévue à cet effet en saillie sur la surface extérieure de la cloison de compartimentage 14 et une languette 26 également prévue en saillie à cet effet sur la surface intérieure du couvercle 12B, parallèlement à la languette 24 précédente.

Les dispositions qui précèdent étant bien connues par elles-mêmes et/ou ne relevant pas de la présente invention, elles ne seront pas décrites plus en détail ici.

De manière également connue en soi, l'un des compartiments 13A, 13B de la goulotte 10, et, par exemple, son compartiment 13A supérieur, est dévolu à l'implantation de quelconques appareillages, par exemple de quelconques appareillages électriques, non représentés, tandis que l'autre de ces compartiments 13A, 13B, et, donc, en l'espèce, le compartiment 13B inférieur, est dévolu, lui, à l'implantation des câbles ou conducteurs, également non représentés, nécessaires à la desserte de ces appareillages.

Dans la forme de réalisation représentée, ce compartiment 13B inférieur est lui-même fractionné, transversalement, en sous-compartiments 13'B, 13"B, 13"'B, pour permettre une séparation, les uns par rapport aux autres, des câbles ou conducteurs qui y sont implantés, ces câbles ou conducteurs pouvant par exemple véhiculer des courants de tensions différentes.

En pratique, le fractionnement correspondant est assuré par des cloisons internes 27, 28 qui, solidaires du fond 16 du socle 11, s'étendent globalement parallèlement aux ailes latérales 17A, 17B de celui-ci.

Par exemple, et tel que représenté, ces cloisons internes 27, 28 sont venues d'un seul tenant du fond 16 du socle 11.

Dans la forme de réalisation représentée, elles ont des hauteurs différentes, la cloison interne 27 la plus proche de l'aile latérale 17B inférieure ayant une hauteur supérieure à la cloison interne 28 la plus éloignée de celle-ci.

De manière connue en soi, également, la goulotte 10 est équipée, intérieurement, dans son compartiment 13B inférieur, d'agrafes de retenue 30, destinées à assurer une retenue temporaire des câbles ou conducteurs présents dans ce compartiment 13B inférieur avant la pose du couvercle 12B associé à celui-ci ou lors d'une dépose de ce couvercle 12B.

Par exemple, et tel que représenté, de telles agrafes de retenue 30 sont prévues, de place en place, sur l'une et l'autre des deux parois longitudinales du socle 11 que constituent les cloisons internes 27, 28, pour la retenue des câbles ou conducteurs éventuellement présents dans les sous-compartiments 13"B et 13"'B intervenant au-dessus de celles-ci.

Pour ce faire, ces cloisons internes 27, 28 forment chacune, longitudinalement, le long de leur bord libre, dans la forme de réalisation représentée, un crochet 31.

Mais, bien entendu, pour la retenue des câbles ou conducteurs éventuellement présents dans le sous-compartiment 13'B intervenant au-dessus de l'aile latérale 17B inférieure du socle 11, des agrafes de retenue 30 peuvent également être rapportées, de place en place, sur la paroi longitudinale que constitue corollairement cette aile latérale 17B.

Pour ce faire, cette aile latérale 17B présente, elle aussi, longitudinalement, dans la forme de réalisation représentée, le long du bord libre d'un retour 32 dirigé vers l'intérieur, un crochet 31 analogue aux crochets 31 précédents.

Préférentiellement, les diverses agrafes de retenue 30 mises en oeuvre sont toutes identiques entre elles.

Seule l'une de ces agrafes de retenue 30 sera donc décrite ci-après.

De manière connue en soi, cette agrafe de retenue 30 comporte, d'une part, une embase de fixation 33, par laquelle, suivant des dispositions décrites plus en détail ultérieurement, elle est apte à être rapportée localement sur une quelconque paroi longitudinale du socle 11 de la goulotte 10, en l'espèce l'une des cloisons internes 27, 28 de ce socle 11 ou son aile latérale 17B inférieure, et, d'autre part, un volet de retenue 34, qui est articulé à l'embase de fixation 33, et qui est ainsi susceptible de passer d'une position d'attente pour laquelle, tel que représenté sur les figures 1, 10 et 12, il laisse un libre accès au volume intérieur sous-jacent de ce socle 11, en l'espèce celui des sous-compartiments 13"B, 13"'B ici seuls concernés à titre d'exemple, et une position de service, pour laquelle, tel que représenté sur les figures 9, 11 et 13, il referme au contraire au moins partiellement ce volume intérieur, en s'étendant alors sensiblement transversalement par rapport à celui-ci.

Suivant l'invention, l'agrafe de retenue 30 comporte, de manière autonome, c'est-à-dire indépendamment du socle 11 de la goulotte 10, et indépendamment de tout autre organe ou composant de ce socle 11 ou de cette goulotte 10, des moyens de verrouillage débrayables 35, qui, associés au volet de retenue 34, sont propres à assurer un maintien en position de service.

Plus particulièrement, les moyens de verrouillage 35 sont agencés de manière à créer, sur le trajet du volet de retenue 34, un point dur ou encore un point de non retour de part et d'autre duquel ledit volet de retenue 34 est stable dans ses positions de service (voir figures 9, 11 et 13) et d'attente (voir figures 1, 10 et 12).

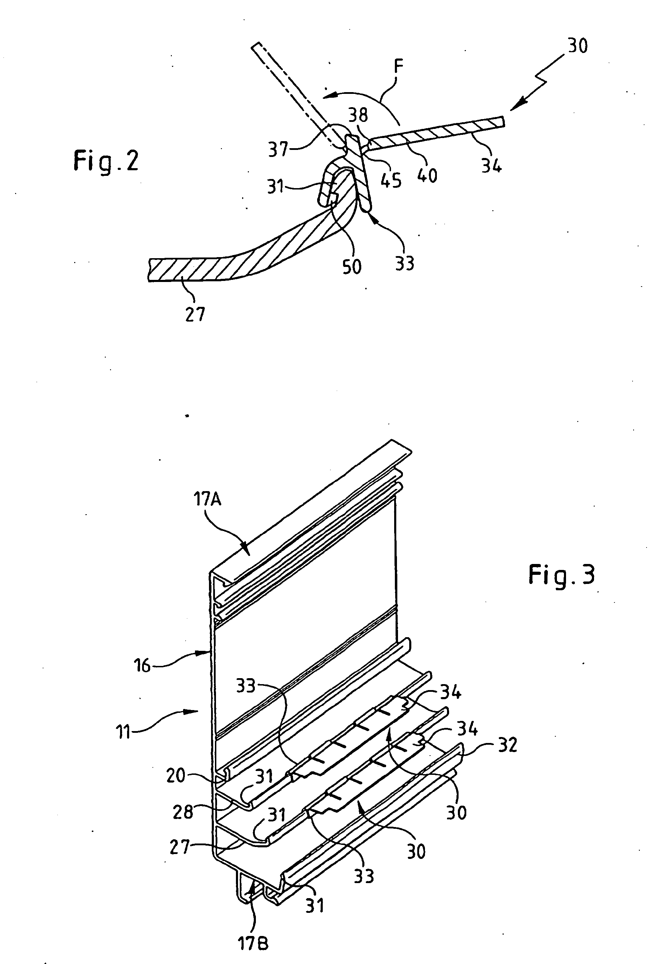

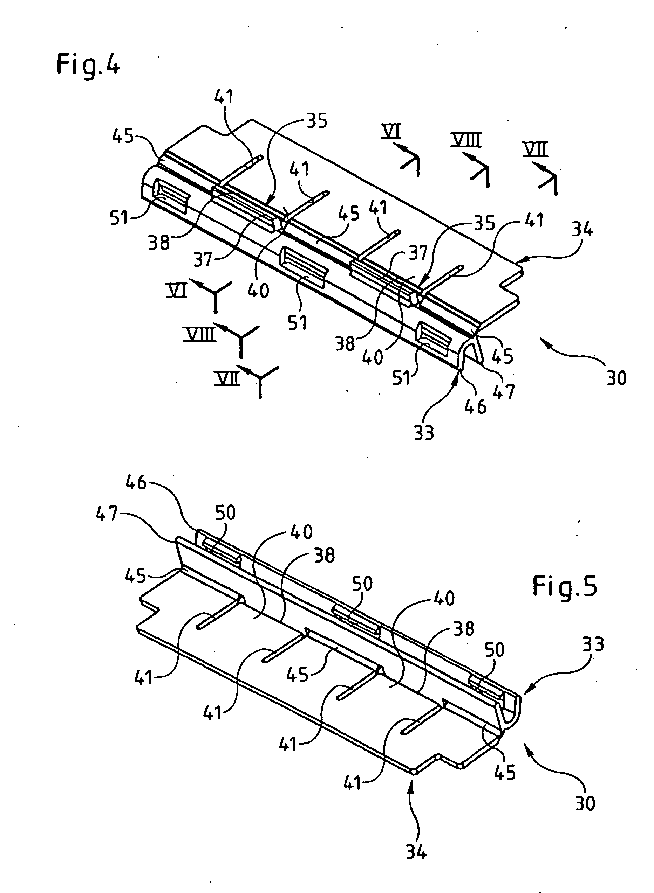

Dans la forme de réalisation représentée sur les figures 1 à 9, les moyens de verrouillage débrayables 35 associés au volet de retenue 34 comportent, d'une part, en saillie sur l'embase de fixation 33, au moins un talon de verrouillage 37, et, d'autre part, sur le volet de retenue 34, en correspondance avec le talon de verrouillage 37 précédent, au moins une languette de verrouillage 38, qui est susceptible de passer d'un côté à l'autre de ce talon de verrouillage 37, et qui est ainsi apte à se prendre sous celui-ci, comme schématisé en traits interrompus sur la figure 2.

Le talon de verrouillage 37 forme une butée franchissable par la languette de verrouillage 38 entre les deux positions stables du volet de retenue 34, sa position de service et sa position d'attente. Sur le trajet du volet de retenue 34, il est créé un point dur situé au franchissement de la butée par la languette de verrouillage 38.

Ainsi, le point dur ou de non retour entre les deux positions stables du volet de retenue 34 est formé, dans ce cas typique, par la coopération de butée entre le talon de verrouillage 37 et la languette de verrouillage 38.

Préférentiellement, et cela est le cas dans la forme de réalisation représentée, les moyens de verrouillage débrayables 35 associés au volet de retenue 34 comportent, à distance l'un de l'autre, sur l'embase de fixation 33, au moins deux talons de verrouillage 37, et, sur le volet de retenue 34, en correspondance avec ces talons de verrouillage 37, un nombre égal de languettes de verrouillage 38.

Par exemple, et tel que représenté, seuls deux talons de verrouillage 37 et deux languettes de verrouillage 38 sont prévus.

En pratique, les talons de verrouillage 37 s'étendent du côté de l'embase de fixation 33 tourné vers le volet de retenue 34, et, corollairement, les languettes de verrouillage 38 s'étendent le long du bord longitudinal du volet de retenue 34 le plus proche de l'embase de fixation 33.

Dans la forme de réalisation représentée, les talons de verrouillage 37 se présentent sous la forme de simples nervures.

Préférentiellement, cependant, et tel que représenté, pour faciliter le passage du volet de retenue 34 de sa position d'attente à sa position de service, la tranche 39 de ces talons de verrouillage 37 s'étend au moins pour partie en biais du côté de la position d'attente du volet de retenue 34.

Par exemple, et tel que représenté, la tranche 39 des talons de verrouillage 37 s'étend entièrement en biais, de la position de service du volet de retenue 34 à la position d'attente de celui-ci.

Autrement dit, l'arête de la tranche 39 des talons de verrouillage 37 la plus éloignée du volet de retenue 34 est à une distance supérieure de l'embase de fixation 33 que son arête la plus proche de ce volet de retenue 34.

Bien entendu, l'une et l'autre de ces arêtes sont préférentiellement adoucies par un arrondi, tel que représenté.

Dans la forme de réalisation représentée, les languettes de verrouillage 38 sont chacune formées par l'extrémité libre d'une patte de verrouillage 40, qui, tout en appartenant au volet de retenue 34, est élastiquement déformable par rapport à celui-ci.

En pratique, les pattes de verrouillage 40 formant ainsi les languettes de verrouillage 38 s'étendent suivant le plan même du volet de retenue 34, en étant latéralement chacune individualisées dans celui-ci par deux fentes 41.

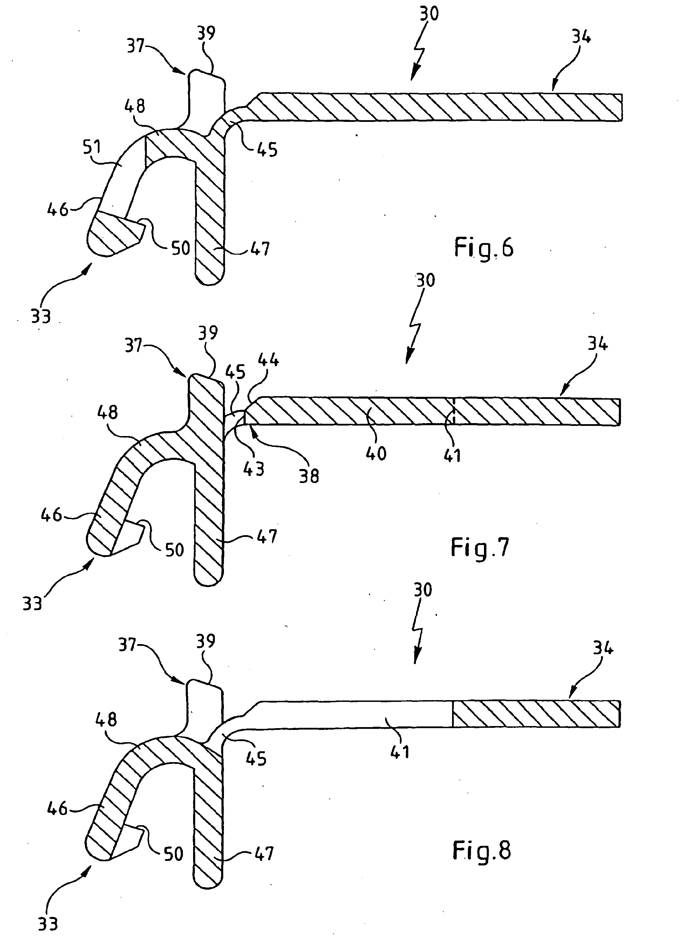

Préférentiellement, et tel que représenté, pour faciliter, comme précédemment, le passage du volet de retenue 34 de sa position d'attente à sa position de service, la tranche 43 des languettes de verrouillage 38 est abattue par un chanfrein 44 du côté des talons de verrouillage 37, ainsi qu'il est mieux visible pour l'un d'eux sur la figure 7.

Dans la forme de réalisation représentée, le volet de retenue 34 est articulé d'un seul tenant à l'embase de fixation 33 par au moins une charnière 45, l'ensemble formant de moulage une seule et même pièce.

Préférentiellement, et tel que représenté, l'agrafe de retenue 30 suivant l'invention comporte, ainsi, à distance l'une de l'autre, plusieurs charnières 45, et celles-ci alternent avec les talons de verrouillage 37.

Par exemple, et tel que représenté, trois charnières 45 sont prévues.

Chaque talon de verrouillage 37 est ainsi encadré par deux charnières 45.

Dans la forme de réalisation représentée, les charnières 45 sont chacune formées par un voile de moindre épaisseur reliant en continu le volet de retenue 34 à l'embase de fixation 33.

Dans la forme de réalisation représentée, l'embase de fixation 33 comporte, quant à elle, suivant globalement une section transversale en U, deux ailes 46, 47 reliées l'une à l'autre par une zone médiane 48 arrondie, et les talons de verrouillage 37 font saillie au dos de la zone médiane 48.

Plus précisément, dans cette forme de réalisation, l'une des ailes 46, 47 de l'embase de fixation 33, en l'espèce son aile 47 la plus proche du volet de retenue 34, est sensiblement plane, et les talons de verrouillage 37 s'étendent sensiblement en continuité avec elle, à l'extrémité correspondante de la zone médiane 48.

Pour l'assujettissement de l'agrafe de retenue 30 à une paroi longitudinale du socle 11 de la goulotte 10, en l'espèce les cloisons internes 27, 28 de ce socle 11 ou son aile latérale 17B inférieure, l'embase de fixation 33 comporte, dans la forme de réalisation représentée, au moins un cran d'encliquetage 50, propre à coopérer en retenue avec le crochet 31 d'une telle paroi longitudinale.

Préférentiellement, et cela est le cas dans la forme de réalisation représentée, l'embase de fixation 33 comporte, à distance l'un de l'autre, plusieurs crans d'encliquetage 50, en l'espèce trois, et ceux-ci s'étendent chacun respectivement en correspondance avec les charnières 45.

En pratique, ces crans d'encliquetage 50 font saillie sur la surface interne d'une des ailes 46, 47 de l'embase de fixation 33.

Plus précisément, ils font saillie sur la surface interne de celle des ailes 46, 47 de l'embase de fixation 33 qui est opposée à celle avec laquelle les talons de verrouillage 37 sont en continuité.

Il s'agit donc, en l'espèce, de l'aile 46 de cette embase de fixation 33 la plus éloignée du volet de retenue 34.

Pour faciliter le moulage des crans d'encliquetage 50 présents en saillie sur sa surface intérieure, cette aile 46 est ajourée par un évidement 51 au droit de chacun de ces crans d'encliquetage 50.

Par exemple, et tel que représenté sur les figures 6 à 8, le moulage d'une agrafe de retenue 30 suivant l'invention se fait dans la position d'attente du volet de retenue 34.

L'agrafe de retenue 30, représentée sur les figures 1 à 9, est dès lors prête à l'emploi.

Pour sa mise en oeuvre, il suffit de la rapporter sur la paroi longitudinale à équiper du socle 11, par simple encliquetage de son embase de fixation 33 sur le crochet 31 de celle-ci, tel que représenté sur les figures 1 à 3.

Tel que représenté en traits continus sur ces figures 1 à 3, le volet de retenue 34 s'étend alors en direction opposée au fond 16 du socle 11, en laissant, comme recherché, un libre accès au volume intérieur de celui-ci.

Conjointement, et ainsi qu'on le notera, les talons de verrouillage 37 de l'agrafe de retenue 30 suivant l'invention s'étendent alors, eux, au-dessus de ce volume intérieur, ou, plus précisément, au-dessus du volume intérieur à fermer, en l'espèce celui des sous-compartiments 13"B, 13"'B de la goulotte 10.

Pour le passage du volet de retenue 34 de la position d'attente qui est alors la sienne à sa position de service, il suffit de le faire pivoter par rapport à l'embase de fixation 33, à la faveur des charnières 45, tel que schématisé par la flèche F sur la figure 2, jusqu'à ce que, à la faveur d'une déformation élastique temporaire des pattes de verrouillage 38, accompagnée, éventuellement, d'une déformation élastique également temporaire des charnières 45, les languettes de verrouillage 38 viennent se prendre sous les talons de verrouillage 37, en passant le point dur ou le point de non retour lors du franchissement de la butée formée par les talons de verrouillage.

Pour la position de service ainsi obtenue, le volet de retenue 34 de l'agrafe de retenue 30 suivant l'invention s'étend intégralement en porte à faux par rapport à l'embase de fixation 33, comme pour la position d'attente précédente, sans que, du côté de ce volet de retenue 34 opposé à l'embase de fixation 33, il y ait nécessairement une quelconque coopération avec une quelconque paroi longitudinale du socle 11 de la goulotte 10 ou avec un quelconque autre composant de ce socle 11 ou de cette goulotte 10.

Les talons de verrouillage 37 s'opposant au retour du volet de retenue 34 en position d'attente, la position de service de ce volet de retenue 34 est parfaitement stable.

L'encliquetage intervenant entre l'embase de fixation 33 et la paroi longitudinale concernée du socle 11, toute rotation intempestive de l'agrafe de retenue 30 suivant l'invention est évitée, même si son volet de retenue 34 est l'objet d'un effort de poussée de la part des câbles ou conducteurs qu'il retient.

Ainsi, cet encliquetage contribue avantageusement au bon maintien de l'ensemble sur le socle 11.

Il est possible de ramener, si désiré, ce volet de retenue 34 en position d'attente.

Il suffit, pour ce faire, de lui appliquer un mouvement de pivotement inverse du précédent.

Dans la forme de réalisation représentée sur les figures 10 à 13, les moyens de verrouillage débrayables 35 associés au volet de retenue 34 comprennent une charnière bistable 45B comportant le passage d'un point dur, ou point de non retour, entre deux positions stables du volet de retenue 34, sa position de service et sa position d'attente.

Cette charnière bistable 45B est située entre deux charnières de pivotement 45A du volet de retenue 34.

Ces charnières de pivotement 45A sont formées par un voile de moindre épaisseur de la matière constituant l'agrafe de retenue 30.

En outre, selon une caractéristique avantageuse, cette charnière bistable 45B forme un moyen de rappel élastique du volet de retenue 34 entre le point dur et sa position stable d'origine.

Cette charnière bistable 45B est constituée par une partie du volet de retenue 34 en forme de coin dont une extrémité charnière 45"B est rattachée au volet de retenue 34 et dont l'autre extrémité charnière 45'B est rattachée à l'embase de fixation 33, les deux extrémités charnières 45"B et 45'B étant formées d'un voile de moindre épaisseur.

Plus particulièrement, les deux extrémités charnières 45'B, 45"B sont formées de sorte qu'en position d'attente du volet, leurs cambrures sont orientées dans des sens opposés, l'extrémité charnière 45"B rattachée au volet de retenue étant seulement une charnière de pivotement alors que l'extrémité charnière 45'B rattachée à l'embase de fixation 33 étant conformée pour être "fermée" dans les deux positions stables du volet de retenue, et conférant par là même la bistabilité à ladite charnière bistable 45B.

Comme le montrent plus particulièrement les figures 10 et 12, lorsque le volet de retenue 34 est en position d'attente, la charnière bistable 45B fait alors saillie vers l'arrière du plan dudit volet de retenue 34, son extrémité charnière 45'B reliée à l'embase de fixation 33 étant alors "fermée" ou repliée contre l'embase de fixation 33 pour maintenir le volet de retenue 34 en position stable d'attente.

Comme le montrent plus particulièrement les figures 11 et 13, lorsque l'agrafe de retenue 30 est en position de service, la charnière bistable 45B s'étend en partie dans le plan du volet de retenue 34 en formant une jonction entre le volet de retenue 34 et une aile plane 47 de l'embase de fixation 33, l'extrémité charnière 45'B de la charnière bistable 45 étant également "fermée" ou repliée contre l'embase de fixation 33.

Sur le trajet du volet de retenue 34, entre ses deux positions stables, sa position de service et sa position d'attente, l'extrémité charnière 45'B "s'ouvre" ou s'étend entre la position stable d'origine du volet de retenue et le point dur puis, après le passage du point dur, se ferme pour amener le volet de retenue dans sa position stable d'arrivée.

En outre, l'extrémité charnière 45'B de la charnière bistable 45B forme un moyen de rappel élastique du volet de retenue entre le point dur et sa position stable d'origine.

Tout comme le mode de réalisation précédent représenté sur les figures 1 à 9, l'embase de fixation 33 comporte, quant à elle, suivant globalement une section transversale en U, deux ailes 46, 47 reliées l'une à l'autre par une zone médiane arrondie.

L'une des ailes 47 de l'embase de fixation 33 étant sensiblement plane, et la charnière bistable 45B comprend une partie s'étendant sensiblement en continuité avec elle.

La charnière bistable 45B est d'ailleurs reliée à cette aile 47 sensiblement plane de l'embase de fixation 33 par l'extrémité charnière 45'B.

Pour l'assujettissement de l'agrafe de retenue 30 à une paroi longitudinale du socle 11 de la goulotte 10, en l'espèce les cloisons internes 27, 28 de ce socle 11 ou de son aile latérale 17B inférieure, l'embase de fixation 33 comporte, dans la forme de réalisation représentée sur les figures 10 à 13, au moins deux crans d'encliquetage 50, positionnés en regard l'un de l'autre, et propres à coopérer en retenue avec un double crochet 31 d'une telle paroi longitudinale.

En pratique, ces crans d'encliquetage 50 font saillie sur la surface interne des ailes 46, 47 de l'embase de fixation 33.

Bien entendu, ici l'agrafe de retenue 30 est formée d'une seule pièce en matière plastique.

Bien entendu, la présente invention ne se limite pas à la forme de réalisation décrite et représentée, mais englobe toute variante d'exécution, notamment en ce qui concerne l'embase de fixation permettant de rapporter l'agrafe de retenue suivant l'invention sur une paroi longitudinale du socle de goulotte à équiper, cette embase de fixation pouvant avoir une configuration différente de celle plus particulièrement décrite et représentée, en fonction, notamment, de la configuration propre d'une telle paroi longitudinale.

## Revendications

1. Agrafe de retenue pour goulotte, du genre comportant, d'une part, une embase de fixation (33), par laquelle elle est apte à être rapportée localement sur une quelconque paroi longitudinale du socle (11) d'une telle goulotte, telle que par exemple une cloison interne (27, 28) ou une aile latérale (17B) de ce socle (11), et, d'autre part, un volet de retenue (34), qui est articulé à l'embase de fixation (33), et qui est ainsi susceptible de passer d'une position d'attente, pour laquelle il laisse un libre accès au volume intérieur sous-jacent de ce socle (11), à une position de service, pour laquelle il referme au contraire au moins partiellement ce volume intérieur, en s'étendant alors sensiblement transversalement par rapport à celui-ci, **caractérisée en ce qu'**elle comporte, de manière indépendante de tout organe ou composant du socle (11) ou de la goulotte, des moyens de verrouillage débrayables (35) du volet de retenue (34) dans sa position de service.

2. Agrafe de retenue selon la revendication 1, **caractérisée en ce que** les moyens de verrouillage (35) sont agencés de manière à créer, sur le trajet du volet de retenue, un point dur de part et d'autre duquel ledit volet de retenue est stable dans ses positions de service et d'attente.

3. Agrafe de retenue suivant l'une des revendications 1 ou 2, **caractérisée en ce que** les moyens de verrouillage débrayables (35) associés au volet de retenue (34) comportent, d'une part, en saillie sur l'embase de fixation (33), au moins un talon de verrouillage (37), et, d'autre part, sur le volet de retenue (34), en correspondance avec le talon de verrouillage (37) précédent, au moins une languette de verrouillage (38), qui est susceptible de passer d'un côté à l'autre de ce talon de verrouillage (37), et qui est ainsi apte à se prendre sous celui-ci.

4. Agrafe de retenue suivant la revendication 3, **caractérisée en ce que** le talon de verrouillage (37) s'étend du côté de l'embase de fixation (33) tourné vers le volet de retenue (34).

5. Agrafe de retenue suivant l'une quelconque des revendications 3, 4, **caractérisée en ce que** la tranche (39) du talon de verrouillage (37) s'étend au moins pour partie en biais du côté de la position d'attente du volet de retenue (34).

6. Agrafe de retenue suivant la revendication 5, **caractérisée en ce que** la tranche (39) du talon de verrouillage (37) s'étend entièrement en biais, de la position de service du volet de retenue (34) à la position d'attente de celui-ci.

7. Agrafe de retenue suivant l'une quelconque des revendications 1 à 6, **caractérisée en ce que** la languette de verrouillage (38) est formée par l'extrémité libre d'une patte de verrouillage (40) qui, tout en appartenant au volet de retenue (34), est élastiquement déformable par rapport à celui-ci.

8. Agrafe de retenue suivant la revendication 7, **caractérisée en ce que** la patte de verrouillage (40) s'étend suivant le plan même du volet de retenue (34), en étant latéralement individualisée dans celui-ci par deux fentes (41).

9. Agrafe de retenue suivant l'une quelconque des revendications 1 à 8, **caractérisée en ce que** le volet de retenue (34) est articulé d'un seul tenant à l'embase de fixation (33) par au moins une charnière (45).

10. Agrafe de retenue suivant la revendication 9, **caractérisée en ce que** la charnière (45) est formée par un voile de moindre épaisseur.

11. Agrafe de retenue suivant l'une quelconque des revendications 1 à 10, **caractérisée en ce que** les moyens de verrouillage débrayables (35) associés au volet de retenue (34) comportent, à distance l'un de l'autre, sur l'embase de fixation (33), au moins deux talons de verrouillage (37), et, sur le volet de retenue (34), en correspondance avec ces talons de verrouillage (37), un nombre égal de languettes de verrouillage (38).

12. Agrafe de retenue suivant les revendications 9 et 11, prises conjointement, **caractérisée en ce qu'**elle comporte, à distance l'une de l'autre, plusieurs charnières (45), et celles-ci alternent avec les talons de verrouillage (37).

13. Agrafe de retenue suivant l'une quelconque des revendications 1 à 12, **caractérisée en ce que** l'embase de fixation (33) comporte, suivant globalement une section transversale en U, deux ailes (46, 47) reliées l'une à l'autre par une zone médiane (48), et le ou les talons de verrouillage (37) font saillie au dos de la zone médiane (48).

14. Agrafe de retenue suivant la revendication 13, **caractérisée en ce que** l'une des ailes (46, 47) de l'embase de fixation (33) est sensiblement plane, et le ou les talons de verrouillage (37) s'étendent sensiblement en continuité avec elle.

15. Agrafe de retenue selon l'une des revendications 1 ou 2, **caractérisée en ce que** les moyens de verrouillage débrayables (35) du volet de retenue (34) comprennent une charnière bistable (45B) comportant le passage d'un point dur entre deux positions stables du volet de retenue (34), sa position de service et sa position d'attente.

16. Agrafe de retenue selon la revendication 15, **caractérisée en ce que** la charnière bistable (45B) forme un moyen de rappel élastique du volet de retenue (34) entre le point dur et sa position stable d'origine.

17. Agrafe de retenue selon l'une des revendications 15 ou 16, **caractérisée en ce que** la charnière bistable (45B) est située entre deux charnières de pivotement (45A) du volet de retenue.

18. Agrafe de retenue selon l'une des revendications 15 à 17, **caractérisée en ce que** la charnière bistable (45B) est constituée par une partie du volet de retenue (34), en forme de coin dont une extrémité charnière (45"B) est rattachée au volet de retenue (34) et dont l'autre extrémité charnière (45'B) conférant la bistabilité à ladite charnière bistable (45B) est rattachée à l'embase de fixation (33), les deux extrémités charnières (45"B, 45'B) étant formées d'un voile de moindre épaisseur.

19. Agrafe de retenue suivant l'une quelconque des revendications 1 à 18, **caractérisée en ce que** l'embase de fixation (33) comporte au moins un cran d'encliquetage (50).

20. Agrafe de retenue suivant la revendication 19, **caractérisée en ce que** le cran d'encliquetage (50) fait saillie sur la surface interne d'une des ailes (46, 47) de l'embase de fixation (33).

21. Agrafe de retenue selon la revendication 20, **caractérisée en ce que** l'embase de fixation (33) comporte au moins deux crans d'encliquetage (50) en regard l'un de l'autre, les crans d'encliquetage (50) faisant saillie sur la surface interne des ailes (46, 47) de l'embase de fixation (33).

22. Agrafe de retenue suivant les revendications 14 et 20, prises conjointement, **caractérisée en ce que** le cran d'encliquetage (50) fait saillie sur la surface interne de celle des ailes (46, 47) de l'embase de fixation (33) qui est opposée à celle avec laquelle le ou les talons de verrouillage (37) sont en continuité.

23. Agrafe de retenue suivant l'une des revendications 20 à 22, **caractérisée en ce que** l'embase de fixation (33) comporte, à distance l'un de l'autre, plusieurs crans d'encliquetage (50), et ceux-ci s'étendent chacun respectivement en correspondance avec les charnières (45).

## Claims

1. A retaining clip for trunking, of the kind including, on the one hand, a fixing base (33) by which it is adapted to be attached locally to any longitudinal wall of the base section (11) of such trunking, such as an internal partition (27, 28) or a lateral flange (17B) of the base section (11), for example, and, on the other hand, a retaining flap (34) which is articulated to the fixing base (33) and can therefore move from a standby position in which it allows unrestricted access to the underlying interior volume of the base section (11) to a service position in which it closes that interior volume at least partly, then extending substantially transversely relative to it, **characterised in that** it includes, independently of any member or component of the base section (11) or of the trunking, releasable locking means (35) for locking the retaining flap (34) in its service position.

2. A retaining clip according to claim 1, **characterised in that** the locking means (35) are adapted to create a sticking point on the trajectory of the retaining flap on respective opposite sides of which said retaining flap is stable in its service and standby positions.

3. A retaining clip according to either claim 1 or claim 2, **characterised in that** the releasable locking means (35) associated with the retaining flap (34) include, on the one hand, at least one locking bead (37) projecting from the fixing base (33) and, on the other hand, at least one locking tongue (38) on the retaining flap (34) and in corresponding relationship to the locking bead (37), adapted to move from one side to the other on that locking bead (37), and thereby adapted to engage under it.

4. A retaining clip according to claim 3, **characterised in that** the locking bead (37) is on the side of the fixing base (33) facing towards the retaining flap (34).

5. A retaining clip according to either claim 3 or claim 4, **characterised in that** the edge surface (39) of the locking bead (37) is at least partly oblique on the standby position side of the locking flap (34).

6. A retaining clip according to claim 5, **characterised in that** the entire edge surface (39) of the locking bead (37) is oblique from the service position of the retaining flap (34) to its standby position.

7. A retaining clip according to any of claims 1 to 6, **characterised in that** the locking tongue (38) is formed by the free end of a locking lug (40) which is part of the retaining flap (34) and elastically deformable relative to it.

8. A retaining clip according to claim 7, **characterised in that** the locking lug (40) is in the plane of the retaining flap (34) and its sides are individually defined by two slots (41) in the flap.

9. A retaining clip according to any of claims 1 to 8, **characterised in that** the retaining flap (34) is articulated to the fixing base (33) by at least one integral hinge (45).

10. A retaining clip according to claim 9, **characterised in that** the hinge (45) is formed by a thin web.

11. A retaining clip according to any of claims 1 to 10, **characterised in that** the releasable locking means (35) associated with the retaining flap (34) include at least two spaced locking beads (37) on the fixing base (33) and the same number of locking tongues (38) in corresponding relationship to the locking beads (37) on the retaining flap (34).

12. A retaining clip according to claims 9 and 11, **characterised in that** it includes a plurality of spaced hinges (45) alternating with the locking beads (37).

13. A retaining clip according to any of claims 1 to 12, **characterised in that** the fixing base (33) has a globally U-shaped cross section with two flanges (46, 47) connected by a middle area (48) and the locking bead (37) or each locking bead (37) projects from the back of the middle area (48).

14. A retaining clip according to claim 13, **characterised in that** one of the flanges (46, 47) of the fixing base (33) is substantially plane and the locking bead (37) or each locking bead (37) is substantially continuous with it.

15. A retaining clip according to either claim 1 or claim 2, **characterised in that** the releasable locking means (35) of the retaining flap (34) include a bistable hinge (45B) providing a sticking point between two stable positions of the retaining flap (34), i.e. its service position and its standby position.

16. A retaining clip according to claim 15, **characterised in that** the bistable hinge (45B) forms return spring means for the retaining flap (34) between the sticking point and its original stable position.

17. A retaining clip according to either claim 15 or claim 16, **characterised in that** the bistable hinge (45B) is between two pivot hinges (45A) of the retaining flap.

18. A retaining clip according to any of claims 15 to 17, **characterised in that** the bistable hinge (45B) is a part of the retaining flap (34) in the form of an angle bracket of which one hinged end (45"B) is attached to the retaining flap (34) and the other hinged end (45'B) renders said bistable hinge (45B) bistable and is attached to the fixing base (33), the two hinged ends (45"B, 45'B) being formed by a thin web.

19. A retaining clip according to any of claims 1 to 18, **characterised in that** the fixing base (33) includes at least one clip (50).

20. A retaining clip according to claim 19, **characterised in that** the clip (50) projects from the inside surface of one of the flanges (46, 47) of the fixing base (33).

21. A retaining clip according to claim 20, **characterised in that** the fixing base (33) includes at least two facing clips (50) projecting from the inside surface of the flanges (46, 47) of the fixing base (33).

22. A retaining clip according to claims 14 and 20, **characterised in that** the clip (50) projects from the inside surface of whichever of the flanges (46, 47) of the fixing base (33) that is opposite the flange with which the locking beads (37) or each locking bead (37) is continuous.

23. A retaining clip according to any of claims 20 to 22, **characterised in that** the fixing base (33) includes a plurality of spaced clips (50), each of which is in corresponding relationship to a respective hinge (45).

## Patentansprüche

1. Halteklammer für einen Kabelkanal, der Art mit einerseits einem Befestigungsfuß (33), durch den diese lokal auf eine beliebige Längswand des Sockels (11) eines derartigen Kabelkanals, wie zum Beispiel eine innere Trennwand (27, 28) oder einen Seitenflügel (17B) des Sockels (11) aufgesetzt zu werden vermag, und andererseits mit einer Halteklappe (34), die an dem Befestigungsfuß (33) angelenkt ist und somit von einer Wartestellung, bei der sie freien Zugang zum darunter liegenden Innenraum des Sockels (11) gewährt, in eine Gebrauchsstellung zu wechseln vermag, bei der sie dagegen wenigstens teilweise diesen Innenraum verschließt, und dabei dann im Wesentlichen quer zu diesem verläuft,
**dadurch gekennzeichnet, dass** sie unabhängig von jedem Organ oder Bauteil des Sockels (11) oder des Kabelkanals lösbare Mittel (35) zum Verriegeln der Halteklappe (34) in ihrer Gebrauchsstellung umfasst.

2. Halteklammer nach Anspruch 1,
**dadurch gekennzeichnet, dass** die Verriegelungsmittel (35) solchermaßen ausgebildet sind, dass sie auf dem Weg der Halteklappe einen schwergängigen Punkt bilden, beidseits von dem die Halteklappe in ihrer Gebrauchs- und Wartestellung stabil ist.

3. Halteklammer nach einem der Ansprüche 1 oder 2,
**dadurch gekennzeichnet, dass** die der Halteklappe (34) zugeordneten lösbaren Verriegelungsmittel (35) einerseits auf dem Befestigungsfuß (33) vorstehend wenigstens eine Verriegelungsnase (37) und andererseits auf der Halteklappe (34) in Übereinstimmung mit der vorstehend genannten Verriegelungsnase (37) wenigstens eine Verriegelungszunge (38) umfassen, die von einer Seite der Verriegelungsnase (37) zur anderen gelangen kann und somit unter diese zu greifen vermag.

4. Halteklammer nach Anspruch 3,
**dadurch gekennzeichnet, dass** sich die Verriegelungsnase (37) auf der der Halteklappe (34) zugewandten Seite des Befestigungsfußes (33) erstreckt.

5. Halteklammer nach einem der Ansprüche 3, 4,
**dadurch gekennzeichnet, dass** der Rand (39) der Verriegelungsnase (37) auf der Seite der Wartestellung der Halteklappe (34) wenigstens zum Teil schräg verläuft.

6. Halteklammer nach Anspruch 5,
**dadurch gekennzeichnet, dass** der Rand (39) der Verriegelungsnase (37) von der Gebrauchsstellung der Halteklappe (34) bis zu deren Wartestellung insgesamt schräg verläuft.

7. Halteklammer nach einem der Ansprüche 1 bis 6,
**dadurch gekennzeichnet, dass** die Verriegelungszunge (38) durch das freie Ende einer Verriegelungslasche (40) gebildet ist, die, obgleich der Halteklappe (34) zugehörig, bezüglich dieser elastisch verformbar ist.

8. Halteklammer nach Anspruch 7,
**dadurch gekennzeichnet, dass** sich die Verriegelungslasche (40) in genau der Ebene der Halteklappe (34) erstreckt und dabei durch zwei Schlitze (41) seitlich in dieser individuell anpassbar ist.

9. Halteklammer nach einem der Ansprüche 1 bis 8,
**dadurch gekennzeichnet, dass** die Haltklappe (34) an dem Befestigungsfuß (33) durch wenigstens ein Scharnier (45) einstückig angelenkt ist.

10. Halteklammer nach Anspruch 9,
**dadurch gekennzeichnet, dass** das Scharnier (45) durch eine Biegung mit geringerer Dicke gebildet ist.

11. Halteklammer nach einem der Ansprüche 1 bis 10,
**dadurch gekennzeichnet, dass** die der Halteklappe (34) zugeordneten lösbaren Verriegelungsmittel (35) auf dem Befestigungsfuß (33) voneinander beabstandet wenigstens zwei Verriegelungsnasen (37) und auf der Halteklappe (34) in Übereinstimmung mit den Verriegelungsnasen (37) eine gleiche Anzahl von Verriegelungszungen (38) umfassen.

12. Halteklammer nach den Ansprüchen 9 und 11 in Verbindung miteinander,
**dadurch gekennzeichnet, dass** sie voneinander beabstandet mehrere Scharniere (45) umfasst und diese im Wechsel mit den Verriegelungsnasen (37) angeordnet sind.

13. Halteklammer nach einem der Ansprüche 1 bis 12,
**dadurch gekennzeichnet, dass** der Befestigungsfuß (33) in einem allgemein U-förmigen Querschnitt zwei durch ein Mittelstück (48) miteinander verbundene Flügel (46, 47) aufweist, und die Verriegelungsnase bzw. -nasen (37) auf der Rückseite des Mittelstücks (48) vorstehen.

14. Halteklammer nach Anspruch 13,
**dadurch gekennzeichnet, dass** einer der Flügel (46, 47) des Befestigungsfußes (33) im Wesentlichen eben ist, und die Verriegelungsnase bzw. -nasen (37) im Wesentlichen in Fortsetzung von diesem verlaufen.

15. Halteklammer nach einem der Ansprüche 1 oder 2,
**dadurch gekennzeichnet, dass** die lösbaren Verriegelungsmittel (35) der Halteklappe (34) ein bistabiles Scharnier (45B) umfassen, das die Überwindung eines schwergängigen Punktes zwischen zwei stabilen Positionen der Halteklappe (34), ihrer Gebrauchsstellung und ihrer Wartestellung, aufweist.

16. Halteklammer nach Anspruch 15,
**dadurch gekennzeichnet, dass** das bistabile Scharnier (45B) ein Mittel zum elastischen Rückstellen der Halteklappe (34) zwischen dem schwergängigen Punkt und deren stabilen Ausgangsstellung bildet.

17. Halteklammer nach einem der Ansprüche 15 oder 16,
**dadurch gekennzeichnet, dass** das bistabile Scharnier (45B) zwischen zwei Schwenkscharnieren (45A) der Halteklappe angeordnet ist.

18. Halteklammer nach einem der Ansprüche 15 bis 17,
**dadurch gekennzeichnet, dass** das bistabile Scharnier (45B) von einem winkelförmigen Teil der Halteklappe (34) gebildet ist, dessen eines Scharnierende (45"B) an der Halteklappe (34) befestigt ist und dessen anderes Scharnierende (45'B), das dem bistabilen Scharnier (45B) die Bistabilität verleiht, am Befestigungsfuß (33) befestigt ist, wobei die beiden Scharnierenden (45"B, 45'B) von einer Biegung mit geringerer Dicke gebildet sind.

19. Halteklammer nach einem der Ansprüche 1 bis 18,
**dadurch gekennzeichnet, dass** der Befestigungsfuß (33) wenigstens eine Rastklinke (50) aufweist.

20. Halteklammer nach Anspruch 19,
**dadurch gekennzeichnet, dass** die Rastklinke (50) an der Innenseite eines der Flügel (46, 47) des Befestigungsfußes (33) vorsteht.

21. Halteklammer nach Anspruch 20,
**dadurch gekennzeichnet, dass** der Befestigungsfuß (33) wenigstens zwei sich gegenüberliegende Rastklinken (50) aufweist, wobei die Rastklinken (50) an der Innenseite der Flügel (46, 47) des Befestigungsfußes (33) vorstehen.

22. Halteklammer nach den Ansprüchen 14 und 20 in Verbindung miteinander,
**dadurch gekennzeichnet, dass** die Rastklinke (50) an der Innenseite des Flügels (46, 47) des Befestigungsfußes (33) vorsteht, der gegenüber demjenigen liegt, mit dem die Verriegelungsnase bzw. -nasen (37) einen kontinuierlichen Verlauf bilden.

23. Halteklammer nach einem der Ansprüche 20 bis 22,
**dadurch gekennzeichnet, dass** der Befestigungsfuß (33) voneinander beabstandet mehrere Rastklinken (50) aufweist, die sich jeweils in Übereinstimmung mit den Scharnieren (45) erstrecken.
